# EUROPEAN PATENT SPECIFICATION

(11) **EP 4 023 058 B1**
(45) Date of publication and mention of the grant of the patent: **11.02.2026**
(21) Application number: 21215911.5
(22) Date of filing: 20.12.2021
(51) Int. Cl.: A01J 25/00, A01J 25/11, A01J 25/12

(54) **APPARATUS AND METHOD FOR DRAINING AND FORMING CURD**
VORRICHTUNG UND VERFAHREN ZUM ENTLEEREN UND FORMEN VON KÄSEBRUCH
APPAREIL ET PROCÉDÉ D'ÉGOUTTAGE ET DE FORMATION DE CAILLÉ

(30) Priority: 29.12.2020 EP 20217499
(43) Date of publication of application: 06.07.2022
(73) Proprietor: Tetra Laval Holdings & Finance S.A., 1009 Pully (CH)
(72) Inventor: SPIJKERMAN, Harrie, 8191 LP Wapenveld (NL)
(74) Representative: Tetra Pak Patent Attorneys

(56) References cited:
- EP-A1- 0 818 140
- WO-A1-2010/123348
- FR-A- 1 453 759
- FR-A1- 2 430 721

## Description

### Technical Field

The invention relates to cheese production in general, and more particularly to draining and forming curd.

### Background Art

Today there are different technologies available for removing whey from a curd and whey mixture such that drained curd is obtained. One such technology is to use a vertical tower, also referred to as continuous drainage tower or column. In addition to remove whey from the curd and whey mixture, the drained curd fed out from the vertical tower can be formed into curd blocks that can be placed in moulds and transferred to a final processing station. The combination of draining and forming curd in one and the same equipment as well as the possibility to operate continuously has made vertical towers a widely used piece of equipment in cheese production, such as in semi-hard cheese production. One such example is the Tetra Pak^{®} Casomatic system marketed and sold by Tetra Pak.

Even though the vertical tower is a well-known piece of equipment within the field of cheese production, there is room for improvement. For instance, to even further reduce losses related to inconsistent product quality, it is requested by cheese producers to have cheese towers that to an even higher degree deliver consistent curd quality. Further, shortened production time is often requested by the cheese producers. This may for instance by achieved directly by having more efficient draining and forming, but also indirectly in that the curd quality is more consistent and thus resulting in fewer production stops. Another need in the industry is to offer cheese production equipment that takes less space.

Further prior art is described in patent document FR2430721A1.

Based on the above, there is a need for improved vertical towers that can deliver even higher curd quality consistency and also improved cost efficiency.

### Summary

It is an object of the invention to at least partly overcome one or more of the above-identified limitations of the prior art. In particular, it is an object to provide an apparatus for draining and forming curd that can deliver improved curd consistency.

The object is generally achieved in that the apparatus comprises several towers linked to each other by one or several drainage sections such that the whey is allowed to be drained under mote similar circumstances. This may more efficiently balance out deviations in whey-to-curd ratios in the different towers, and thereby achieve a more consistent curd quality compared to when the different towers drain the curd and whey mixture in isolation, as is the case today.

According to a first aspect it is provided according to claim 1 an apparatus for draining and forming curd, comprising multiple, vertically arranged towers, a common curd distribution arrangement for distributing a curd and whey mixture into the multiple towers, a drainage section for draining whey from the curd and whey mixture, the drainage section forming a continuous space that extends horizontally over each of the multiple towers, each of the multiple towers having openings into the space formed by the drainage section for allowing whey to pass from the multiple towers and into the drainage section, and a base unit arranged beneath the multiple towers to receive drained curd from the multiple towers and place the drained curd in moulds.

The apparatus further comprises a whey circulation unit connected to the drainage section and arranged to circulate whey over the drainage section, to increase the flow of whey and thereby release drained curd in the drainage section. An advantage of having the circulation unit is that small curd particles entering the drainage section can be more easily flushed away.

Another advantage is that by having a common curd distribution arrangement as well as a drainage that extends over each of the towers, the whey can be more uniformly distributed and drained, making it possible to avoid deviations in curd-whey-ratio in the different towers. Having this possibility provides for that a more consistent curd quality can be obtained from the apparatus. An alternative or additional advantage is that more compact equipment can be realized due to the common curd distribution arrangement and by having one drainage section that extends over each of the towers.

The drainage section may be a first drainage section, and the curd drainage apparatus may comprise a second drainage section that is arranged vertically below the first drainage section for draining whey from the curd and whey mixture, the second drainage section forming a continuous space that extends horizontally over each of the multiple towers, each of the multiple towers having openings into the space formed by the second drainage section for allowing whey to pass from the multiple towers and into the second drainage section.

An advantage with having drainage sections at different heights is that the drainage of whey can be controlled with improved accuracy. Since a pressure formed by the curd and whey mixture at the second drainage section will be higher than a pressure formed by the curd and whey mixture and the first drainage section, placed above the second drainage section, different pressures can be applied for releasing the whey from the curd and whey mixture.

The curd drainage apparatus may further comprise a whey extraction pipe arrangement connected to each of the first and second drainage sections.

One advantage with having this pipe arrangement is that the apparatus can be made even more compact.

The apparatus may further comprise a control valve arranged to regulate a flow of whey leaving the drainage section, and a control unit arranged to regulate the control valve based on a difference between the pressure of the whey in drainage section and the pressure of the curd and whey mixture inside at least one of the towers at the location of the tower where the drainage section surrounds the tower.

By having the control valve, it is possible to adjust this such that a desired pressure inside the towers can be achieved. Since the pressure affects the whey drainage, this provides additional possibilities for cheese producers to meet desired properties of the drained curd, and thus the properties of cheese made from the curd.

The curd and whey mixture distribution arrangement may be an agitating device arranged vertically above the multiple towers to distribute the curd and whey mixture into each of the multiple towers. An advantage with this is that a more uniform whey-to-curd ratio can be achieved in the different towers.

A volume of the drainage section, including the total volume of the parts of the towers passing through the drainage section, may be less than 40 % larger than said total volume of said parts of the towers. One advantage with this is that a more compact apparatus may be realized. Another advantage is that the response time for controlling the whey drainage may be shorter since the volume of whey in the drainage section is relatively small. The volume of the drainage section is typically the same as the continuous space formed by the drainage section, i.e. it includes everything inside the volume, including the volume that is taken up by the towers. The total volume of the parts of the towers passing through the drainage section is the same volume as the volume the towers occupy within the drainage section.

The draining section may comprise a cleaning-in-place nozzle. An advantage with having the cleaning-in-place nozzle is that efficient cleaning of the apparatus can be achieved.

The base unit may comprise vertically movable dosing devices arranged underneath each of the multiple towers for receiving the drained curd, and a cutting unit for cutting the drained curd received by the dosing devices into blocks, wherein the dosing devices are configured to individually control the amount of curd that is received and cut from the respective tower. An advantage with this is that the base unit can compensate for deviations in curd quality, i.e. curd-to-whey ratio, by adapting the dosing devices and the cutting unit. Thus, this further reduces the risk of inconsistent curd quality. The dosing devices may configured to individually control the amount of curd that is received and cut from the respective tower by having a curd receiving platform that is lowered down until the desired volume or weight of curd has left the respective tower, and then the curd is cut of and placed in moulds.

A distance between two consecutively placed towers of the multiple towers may be less than 0.3 m. An advantage of having the towers placed close to one another is that efficient horizontal whey exchange can be achieved.

According to a second aspect it is provided according to claim 10 a method for draining and forming curd, said method comprising distributing a curd and whey mixture into multiple towers by using a common distribution arrangement and via a common inlet, draining whey from the curd and whey mixture in a drainage section, the drainage section forming a continuous space that extends horizontally over each of the multiple towers, each of the multiple towers having openings into the space formed by the drainage section for allowing the whey to pass from the multiple towers and into the drainage section, receiving drained curd from the multiple towers by a base unit, arranged beneath the multiple towers, and placing the drained curd in moulds. The method further comprises using a whey circulation unit connected to the drainage section for circulating whey over the drainage section, to increase the flow of whey and thereby release drained curd in the drainage section.

The same features and advantages as presented in view of the first aspect may be implemented for and applies to this second aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1a illustrates a front view of an apparatus for draining and forming curd.
Fig. 1b illustrates a side view of the apparatus illustrated in fig. 1a.
Fig. 2 is a flow chart illustrating a method for draining and forming curd.

### Detailed Description

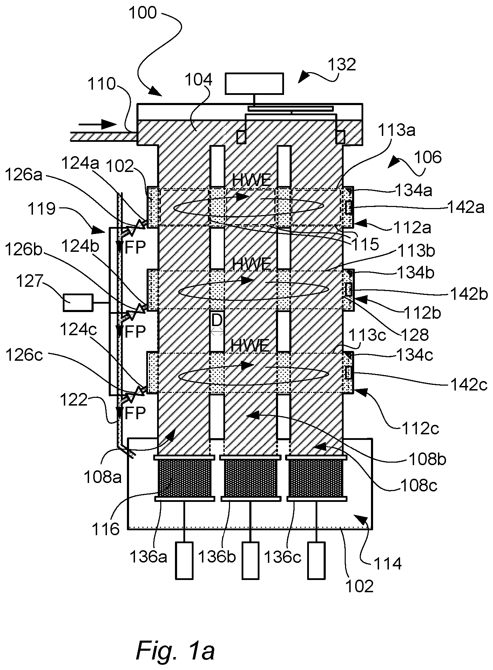

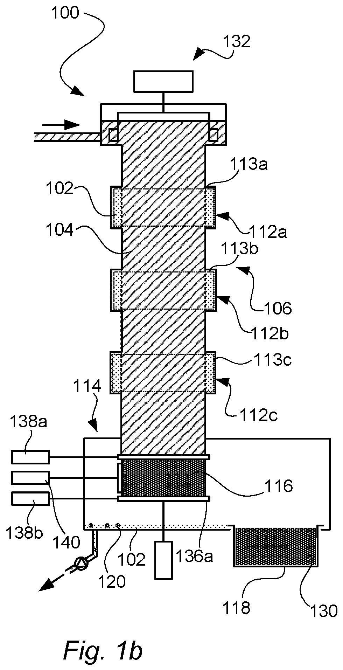

Fig. 1a and 1b generally illustrate an apparatus 100 for draining and forming curd. Fig. 1a illustrates a front view of the apparatus 100 and fig. 1b illustrates a side view of the apparatus 100.

A purpose of the apparatus 100 is to remove whey 102 from a curd and whey mixture 104. To achieve this the apparatus 100 can comprise a number of towers 108a-c. In the particular example illustrated in fig. 1a and 1b, three towers 108a-c are used, but fewer or more towers may also be used.

The curd and whey mixture 104 can be fed into a common inlet 110 of the apparatus 100. As illustrated, this common inlet 110 may be placed in a top section of the apparatus 100, on top of the towers 108a-c. From the common inlet 110, the curd and whey mixture can be fed down into the towers 108a-c.

Each of the towers 108a-c can be provided with one or several drainage sections 112a-c arranged at different heights of the towers 108a-c. In the example illustrated, three drainage sections 112a-c are provided. Each of the drainage sections 112a-c form a continuous space 113a-c that can extend horizontally over each of the towers 108a-c. Having the apparatus 100 arranged in this way allows for that the whey to be drained from the different towers 108a-c at different heights of the towers 108a-c.

A volume of the drainage section 112a, including the total volume of the parts 115 of the towers 108a, 108b, 108c passing through the drainage section (112a), may be less than 40 % larger than said total volume of said parts 115 of the towers 108a, 108b, 108c.

Below the towers 108a-c, a base unit 114 can be arranged. Since whey 102 has been removed from the curd and whey mixture 104 during the transfer down the towers 108a-c, the curd and whey mixture 104 has been transformed into drained curd 116. The drained curd 116 can, due to a lower whey content, be placed in moulds 118 and thereafter be processed further, e.g. final pressing, brining and ripening.

To remove the whey 102 from the drainage sections 112a-c, a whey extraction pipe arrangement 119 can be provided. As illustrated, the whey extraction pipe arrangement 119 can be connected to lower sections of the drainage sections 112a-c such that released whey 102 can be extracted from the drainage sections 112a-c to the base unit 114. The whey 102 is released from the curd and whey mixture 104 due to a pressure formed in the towers 108a-c by the gravity. The pressure in the drainage sections 112a-c may also be controlled for obtaining the desired whey drainage. Then, increasing the pressure in the drainage sections 112a-c reduces the drainage, while decreasing the pressure in the drainage sections 112a-c increases the whey drainage.

The whey 102 extracted via the whey extraction pipe arrangement 119 can be used for flushing out curd remains, also referred to as curd particles 120, in the base unit 114. By using the whey 102 in this way, there is no need to add water or similar to provide for that there is no build-up of curd particles 120 in the base unit 114. This in turn provides for that the whey 102 leaving the base unit 114 comprises the whey 102 released from the curd and whey mixture 104 via the drainage sections 112a-c and the curd particles 120 flushed out from the base unit 114. Avoiding adding water provides for a more cost efficient piece of equipment, but also in that less liquid needs to be removed from the whey 102 when, for example, this is later transformed into whey powder.

The common whey extraction pipe arrangement 119 can comprise a main pipe 122 and connection pipes 124a-c. The connection pipes 124a-c can be connected to the drainage sections 112a-c such that flow paths FP are provided from the drainage sections 112a-c to the main pipe 122. The connection pipes 124a-c can be provided with control valves 126a-c. Having the control valves 126a-c on the connection pipes 124a-c provides for that horizontal whey exchange HWE in the different drainage sections 112a-c can be controlled. For instance, in case the control valve 126a of the first drainage section 112a is closed, the whey 102 will be directed downwards to the second and third drainage section 112b, 112c, thereby affecting the horizontal whey exchange HWE in the second and third drainage section 112b, 112c. The amount of whey 102, or more particularly a ratio between whey and curd, has namely an effect on the horizontal whey exchange HWE. To control the control valves 126a-c, a control unit 127 can be used. This control unit 127 can be used for controlling the control valves 126a-c individually or in combination as explained above.

The towers 108a-c are provided with openings 128 such that the whey 102 can pass from the towers 108a-c into the continuous spaces 113a-c while the curd 116 is kept inside the towers 108a-c and fed downwards to the base unit 114. The control unit 127 can control the draining of whey by regulating the valves 126a-c. By opening a valve to let out more whey, draining is increased for the associated drainage section. This is because less whey in the draining section causes less "back pressure" on the curd and whey mixture in the towers.

As illustrated, in the base unit 114, which may be shared by several towers 108a-c, the drained curd 116 can be formed into curd blocks 130 and placed in the moulds 118. After being placed in the moulds 118, the curd blocks 130 can be transferred to a final pressing station (not illustrated).

To provide for that the curd and whey mixture 104 is distributed evenly in the different towers 108a-c, that is, that a similar ratio of curd and whey is fed into the different towers 108a-c, a common curd distribution arrangement 132 can be used. As illustrated, the common curd distribution arrangement 132 can be an agitating device, herein illustrated as a two axle provided agitating device, arranged to mix the curd and whey mixture 104 such that a similar ratio of curd and whey is provided in the different towers 108a-c.

The drainage sections 112a-c can be provided with cleaning-in-place (CIP) nozzles 134a-c such that efficient cleaning can be provided.

The base unit 114 can be provided with vertically movable dosing devices 136a, 136b, 136 arranged underneath each of the multiple towers 108a, 108b, 108c for receiving the drained curd 116. The dosing devices 136a-c can be individually controlled, which is advantageous since the moisture content may vary in the different towers 108a-c. The controlling of the different dosing devices 136a-c may be made based on height and/or on weight. Once a height setpoint and/or a weight setpoint is reached, i.e. once the desired height and/or weight is achieved, a cutting unit 138a can be used for cutting of the drained curd 1126 such that the curd block 130 is formed. As illustrated, the cutting unit 138a can comprise an upper cutting element 138a arranged for dividing the curd block 130 from the drained curd 116 fed out from the towers 108a-c. A lower, vertically and horizontally movable element 138b is arranged below the cutting unit 138a for receiving the curd block 130. The same element 138b may be used for accomplishing the above described dosing. Once cut-off from the drained curd 116 fed out from the towers 108a-c and resting on the lower element 138b, a pusher unit 140 may be used for pushing the curd block 130 into the mould 118. The movable lower element 138b may be moved towards the mould 118 for assisting in placing the curd block 130 into the mould 118. For illustrative purposes only one cutting unit 138a, lower element 138b and pusher unit 140 are illustrated, but to provide for that the curd blocks 130 can be formed individually for the different towers 108a-c, there can be one cutting unit, lower element and pusher unit 140 for each tower 108a-c.

The horizontal whey exchange HWE may arise due to variations of curd and whey content in the different towers 108a-c, e.g. a tower holding curd and whey mixture 104 with a higher content of whey 102 compared to the curd and whey mixture 104 held a neighboring tower. The difference in variations of curd and whey content in the different towers 108a-c may be decreased due the common drainage sections, as these provide the same level of whey in each drainage section. This result in a similar back pressure for each tower which allows the curd and whey in the different towers to balance out and approach each other, while still keeping the design of the apparatus 100 simple and efficient.

Circulation units 142a-c may be provided in the drainage sections 112a-c. At least one of the circulation units is provided in at least one of the drainage sections. The circulation units 142a-c may be a pump arrangement arranged to create an increased circulation inside the drainage sections 112a-c, by feeding whey out from the respective drainage section and back into the same drainage section. By having this active circulation any curd particles passing through the openings 128 in the towers, into the drainage section 112a-c, may be efficiently flushed away.

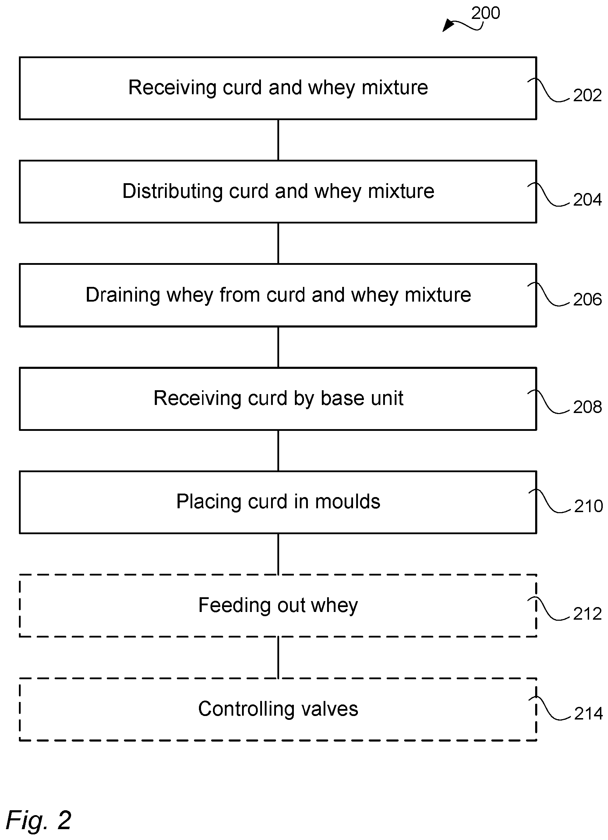

Fig. 2 is flow chart illustrating a method 200 for draining and forming curd. In a first step 202, the curd and whey mixture 104 can be received in the apparatus 100 via the common inlet 110. As described above, the apparatus 100 can comprise multiple towers 108a-c. In a second step 204, the curd and whey mixture 104 can be distributed into the multiple towers 108a-c by using the common distribution arrangement 132. In a third step 206, the whey 102 can be drained from the curd and whey mixture 104, into the drainage section 112a-c. As described above, the drainage section 112a-c can form the continuous space 113a-c that extends horizontally over each of the multiple towers 108a-c. Each of the multiple towers 108a-c can have openings 128 into the space 113a-c formed by the drainage section 112a-c for allowing the whey 102 to pass from the multiple towers 108a-c into the drainage section 112a-c. In a fourth step 208, the drained curd 116 from the multiple towers 108a-c can be received by the base unit 114, arranged beneath the multiple towers 108a-c. In a fifth step 210, the drained curd 116 can be placed in the moulds 118.

Optionally, in a sixth step 212 the whey 102 released from the curd and whey mixture 104 can fed out from the drainage section 112a-c via the common whey extraction pipe arrangement 119 to the base unit 114. As described above, the common whey extraction pipe arrangement 119 may comprise the main pipe 122 and the connection pipes 124a-c provided with the control valves 126a-c. The connection pipes 124a-c may provide the fluid path FP for the whey 102 from the drainage section 112a-c to the main pipe 122. In a seventh step 214, the control valves 126a-c can be controlled individually such that the draining of whey from the multiple towers 108a-c can be adjusted.

From the description above follows that, although various embodiments of the invention have been described and shown, the invention is not restricted thereto, but may also be embodied in other ways within the scope of the subject-matter defined in the following claims.

## Claims

1. An apparatus (100) for draining and forming curd, comprising multiple, vertically arranged towers (108a-c),
a common curd distribution arrangement (132) for distributing a curd and whey mixture (104) into the multiple towers (108a-c),
a drainage section (112a-c) for draining whey (102) from the curd and whey mixture (104), the drainage section (112a-c) forming a continuous space (113a-c) that extends horizontally over each of the multiple towers (108a-c), each of the multiple towers (108a-c) having openings (128) into the continuous space (113a-c) formed by the drainage section (112a-c) for allowing whey (102) to pass from the multiple towers (108a-c) and into the drainage section (112a-c), and
a base unit (114) arranged beneath the multiple towers (108a-c) to receive drained curd (116) from the multiple towers (108a-c) and place the drained curd (116) in moulds (118), **characterized by**
a whey circulation unit (142a-c) connected to the drainage section (112a-c) and arranged to circulate whey (102) over the drainage section (112a-c), to increase the flow of whey and thereby release drained curd (116) in the drainage section (112a-c).

2. The apparatus (100) according to claim 1, wherein the drainage section (112a) is a first drainage section (112a), the curd drainage apparatus (100) comprising a second drainage section (112b) that is arranged vertically below the first drainage section (112a) for draining whey (102) from the curd and whey mixture (104), the second drainage section (112b) forming a continuous space (113b) that extends horizontally over each of the multiple towers (108a-c), each of the multiple towers (108a-c) having openings (128) into the space (113b) formed by the second drainage section (112b) for allowing whey (102) to pass from the multiple towers (108a-c) and into the second drainage section (112b).

3. The curd drainage apparatus (100) according to claim 2, comprising a whey extraction pipe arrangement (119) connected to each of the first and second drainage sections (112a, 112b).

4. The apparatus (100) according to any preceding claim, comprising a control valve (126a) arranged to regulate a flow of whey (102) leaving the drainage section (112a), and a control unit (127) arranged to regulate the control valve (126a) based on a difference between the pressure of the whey in drainage section (112a) and the pressure of the curd and whey mixture (104) inside at least one of the towers (108a-c) at the location of the tower (108a-c) where the drainage section (112a-c) surrounds the tower (108a-c).

5. The apparatus (100) according to any preceding claim, wherein the curd and whey mixture distribution arrangement (132) is an agitating device arranged vertically above the multiple towers (108a-c) to distribute the curd and whey mixture (104) into each of the multiple towers (108a-c).

6. The apparatus (100) according to any preceding claim, wherein a volume of the drainage section (112a), including the total volume of the parts (115) of the towers (108a-c) passing through the drainage section (112a), is less than 40 % larger than said total volume of said parts (115) of the towers (108a-c).

7. The apparatus (100) according to any preceding claim, wherein the draining section (112a-c) comprises a cleaning-in-place nozzle (134a-c).

8. The apparatus (100) according to any preceding claim, wherein the base unit (114) comprises
vertically movable dosing devices (136a-c) arranged underneath each of the multiple towers (108a-c) for receiving the drained curd (116), and
a cutting unit (138a-b) for cutting the drained curd (116) received by the dosing devices (136a-c) into blocks (130), wherein
the dosing devices (136a-c) are configured to individually control the amount of curd that is received and cut from the respective tower (108a-c).

9. The apparatus (100) according to any one of the preceding claims, wherein a distance (D) between two consecutively placed towers of the multiple towers (108a-c) is less than 0.3 m.

10. A method (200) for draining and forming curd, said method comprising
distributing (204) curd and whey mixture (104) into multiple vertically arranged towers (108a-c) by using a common distribution arrangement (132) and via a common inlet (110),
draining (206) whey (102) from the curd and whey mixture (104) in a drainage section (112a-c), the drainage section (112a-c) forming a continuous space (113a-c) that extends horizontally over each of the multiple towers (108a-c), each of the multiple towers (108a-c) having openings (128) into the continuous space (113a-c) formed by the drainage section (112a-c) for allowing the whey (102) to pass from the multiple towers (108a-c) and into the drainage section (112a),
receiving (208) drained curd (116) from the multiple towers (108a-c) by a base unit (114), arranged beneath the multiple towers (108a-c), and
placing (210) the drained curd (116) in moulds (118), **characterized by**
using a whey circulation unit (142a-c) connected to the drainage section (112a-c) for circulating whey (102) over the drainage section (112a-c), to increase the flow of whey and thereby release drained curd (116) in the drainage section (112a-c).

## Patentansprüche

1. Vorrichtung (100) zum Abtropfen und Bilden von Käsebruch, umfassend
mehrere vertikal angeordnete Türme (108a-c),
eine gemeinsame Käsebruchverteilungsanordnung (132) zum Verteilen eines Käsebruch- und Molkegemischs (104) in die mehreren Türme (108a-c),
einen Abtropfabschnitt (112a-c) zum Abtropfen von Molke (102) aus dem Käsebruch- und Molkegemisch (104), wobei der Abtropfabschnitt (112a-c) einen durchgehenden Raum (113a-c) bildet, der sich horizontal über jeden der mehreren Türme (108a-c) erstreckt, wobei jeder der mehreren Türme (108a-c) Öffnungen (128) in den durchgehenden Raum (113a-c) aufweist, der durch den Abtropfabschnitt (112a-c) gebildet wird, um zuzulassen, dass Molke (102) von den mehreren Türmen (108a-c) und in den Abtropfabschnitt (112a-c) verläuft, und
eine Basiseinheit (114), die unter den mehreren Türmen (108a-c) angeordnet ist, um den abgetropften Käsebruch (116) von den mehreren Türmen (108a-c) aufzunehmen und den abgetropften Käsebruch (116) in Formen (118) zu platzieren, **gekennzeichnet durch**
eine Molkekreislaufeinheit (142a-c), die mit dem Abtropfabschnitt (112a-c) verbunden ist und angeordnet ist, um Molke (102) über den Abtropfabschnitt (112a-c) zu zirkulieren, um den Molkestrom zu erhöhen und dadurch den abgetropften Käsebruch (116) im Abtropfabschnitt (112a-c) freizugeben.

2. Vorrichtung (100) nach Anspruch 1, wobei der Abtropfabschnitt (112a) ein erster Abtropfabschnitt (112a) ist, wobei die Käsebruchabtropfvorrichtung (100) einen zweiten Abtropfabschnitt (112b) umfasst, der vertikal unterhalb des ersten Abtropfabschnitts (112a) zum Abtropfen von Molke (102) aus dem Käsebruch- und Molkegemisch (104) angeordnet ist, wobei der zweite Abtropfabschnitt (112b) einen durchgehenden Raum (113b) bildet, der sich horizontal über jeden der mehreren Türme (108a-c) erstreckt, wobei jeder der mehreren Türme (108a-c) Öffnungen (128) in den Raum (113b) aufweist, der durch den zweiten Abtropfabschnitt (112b) gebildet wird, um zuzulassen, dass Molke (102) von den mehreren Türmen (108a-c) und in den zweiten Abtropfabschnitt (112b) verläuft.

3. Käsebruchabtropfvorrichtung (100) nach Anspruch 2, umfassend eine Molke-Extraktionsrohranordnung (119), die jeweils mit dem ersten und zweiten Abtropfabschnitt (112a, 112b) verbunden ist.

4. Vorrichtung (100) nach einem der vorhergehenden Ansprüche, umfassend ein Steuerventil (126a), das angeordnet ist, um einen Molkestrom (102) zu regulieren, der den Abtropfabschnitt (112a) verlässt, und eine Steuereinheit (127), die angeordnet ist, um das Steuerventil (126a) basierend auf einer Differenz zwischen dem Druck der Molke in dem Abtropfabschnitt (112a) und dem Druck des Käsebruch- und Molkegemischs (104) innerhalb mindestens eines der Türme (108a-c) an der Position des Turms (108a-c), an der der Abtropfabschnitt (112a-c) den Turm (108a-c) umgibt, zu regeln.

5. Vorrichtung (100) nach einem der vorhergehenden Ansprüche, wobei die Käsebruch- und Molkegemischverteilungsanordnung (132) eine Rührvorrichtung ist, die vertikal über den mehreren Türmen (108a-c) angeordnet ist, um das Käsebruch- und Molkegemisch (104) in jeden der mehreren Türme (108a-c) zu verteilen.

6. Vorrichtung (100) nach einem der vorhergehenden Ansprüche, wobei ein Volumen des Abtropfabschnitts (112a), einschließlich des Gesamtvolumens der Teile (115) der Türme (108a-c), die durch den Abtropfabschnitt (112a) verlaufen, weniger als 40 % größer als das Gesamtvolumen der Teile (115) der Türme (108a-c) ist.

7. Vorrichtung (100) nach einem der vorhergehenden Ansprüche, wobei der Abtropfabschnitt (112a-c) eine Vor-Ort-Reinigungsdüse (134a-c) umfasst.

8. Vorrichtung (100) nach einem der vorhergehenden Ansprüche, wobei die Basiseinheit (114) Folgendes umfasst:
vertikal bewegliche Dosiervorrichtungen (136a-c), die unter jedem der mehreren Türme (108a-c) zur Aufnahme des abgetropften Käsebruchs (116) angeordnet sind, und
eine Schneideeinheit (138a-b) zum Schneiden des von den Dosiervorrichtungen (136a-c) aufgenommenen abgetropften Käsebruchs (116) in Blöcke (130), wobei
die Dosiervorrichtungen (136a-c) dazu ausgelegt sind, die Menge an Käsebruch, die von dem jeweiligen Turm (108a-c) aufgenommen und geschnitten wird, individuell zu steuern.

9. Vorrichtung (100) nach einem der vorhergehenden Ansprüche, wobei der Abstand (D) zwischen zwei hintereinander angeordneten Türmen der mehreren Türme (108a-c) weniger als 0,3 m beträgt

10. Verfahren (200) zum Abtropfen und Bilden von Käsebruch, wobei das Verfahren Folgendes umfasst:
Verteilen (204) eines Käsebruch- und Molkegemischs (104) in mehrere vertikal angeordnete Türme (108a-c) unter Verwendung einer gemeinsamen Verteilungsanordnung (132) und über einen gemeinsamen Einlass (110),
Abtropfen (206) von Molke (102) aus dem Käsebruch- und Molkegemisch (104) in einem Abtropfabschnitt (112a-c), wobei der Abtropfabschnitt (112a-c) einen durchgehenden Raum (113a-c) bildet, der sich horizontal über jeden der mehreren Türme (108a-c) erstreckt, wobei jeder der mehreren Türme (108a-c) Öffnungen (128) in den durchgehenden Raum (113a-c) aufweist, der durch den Abtropfabschnitt (112a-c) gebildet wird, um zuzulassen, dass Molke (102) von den mehreren Türmen (108a-c) und in den Abtropfabschnitt (112a) verläuft,
Aufnehmen (208) von abgetropftem Käsebruch (116) von den mehreren Türmen (108a-c) durch eine Basiseinheit (114), die unter den mehreren Türmen (108a-c) angeordnet ist, und
Platzieren (210) des abgetropften Käsebruchs (116) in Formen (118), **gekennzeichnet durch**
die Verwendung einer Molkekreislaufeinheit (142a-c), die mit dem Abtropfabschnitt (112a-c) verbunden ist, um die Molke (102) über den Abtropfabschnitt (112a-c) umzuwälzen, um den Molkestrom zu erhöhen und dadurch abgetropften Käsebruch (116) im Abtropfabschnitt (112a-c) freizugeben.

## Revendications

1. Appareil (100) d'égouttage et de formation de caillé, comprenant des tours multiples (108a-c) disposées verticalement,
un dispositif de distribution de caillé commun (132) pour distribuer un mélange de caillé et de lactosérum (104) dans les tours multiples (108a-c),
une section d'égouttage (112a-c) pour égoutter le lactosérum (102) du mélange de caillé et de lactosérum (104), la section d'égouttage (112a-c) formant un espace continu (113a-c) qui s'étend horizontalement sur chacune des tours multiples (108a-c), chacune des tours multiples (108a-c) présentant des ouvertures (128) dans l'espace continu (113a-c) formé par la section d'égouttage (112a-c) pour permettre au lactosérum (102) de passer depuis les tours multiples (108a-c) dans la section d'égouttage (112a-c), et
une unité de base (114) disposée sous les tours multiples (108a-c) pour recevoir le caillé égoutté (116) provenant des tours multiples (108a-c) et placer le caillé égoutté (116) dans des moules (118), **caractérisé par**
une unité de circulation de lactosérum (142a-c) raccordée à la section d'égouttage (112a-c) et disposée de manière à faire circuler le lactosérum (102) sur la section d'égouttage (112a-c), pour augmenter l'écoulement du lactosérum et libérer ainsi le caillé égoutté (116) dans la section d'égouttage (112a-c).

2. Appareil (100) selon la revendication 1, la section d'égouttage (112a) étant une première section d'égouttage (112a), l'appareil d'égouttage de caillé (100) comprenant une seconde section d'égouttage (112b) qui est disposée verticalement au-dessous de la première section d'égouttage (112a) pour égoutter le lactosérum (102) à partir du mélange de caillé et de lactosérum (104), la seconde section d'égouttage (112b) formant un espace continu (113b) qui s'étend horizontalement sur chacune des tours multiples (108a-c), chacune des tours multiples (108a-c) présentant des ouvertures (128) dans l'espace (113b) formé par la seconde section d'égouttage (112b) pour permettre au lactosérum (102) de passer depuis les tours multiples (108a-c) dans la seconde section d'égouttage (112b).

3. Appareil d'égouttage de caillé (100) selon la revendication 2, comprenant un agencement de tuyau d'extraction de lactosérum (119) raccordé à chacune des première et seconde sections d'égouttage (112a, 112b).

4. Appareil (100) selon l'une quelconque des revendications précédentes, comprenant une vanne de commande (126a) conçue pour réguler un écoulement de lactosérum (102) quittant la section d'égouttage (112a), et une unité de commande (127) conçue pour réguler la vanne de commande (126a) en fonction d'une différence entre la pression du lactosérum dans la section d'égouttage (112a) et la pression du mélange de caillé et de lactosérum (104) à l'intérieur d'au moins une des tours (108a-c) à l'emplacement de la tour (108a-c) où la section d'égouttage (112a-c) entoure la tour (108a-c).

5. Appareil (100) selon l'une quelconque des revendications précédentes, l'agencement de distribution de mélange de caillé et de lactosérum (132) étant un dispositif d'agitation disposé verticalement au-dessus des tours multiples (108a-c) pour distribuer le mélange de caillé et de lactosérum (104) dans chacune des tours multiples (108a-c).

6. Appareil (100) selon l'une quelconque des revendications précédentes, un volume de la section d'égouttage (112a), y compris le volume total des parties (115) des tours (108a-c) passant à travers la section d'égouttage (112a), n'étant pas plus grand que 40 % dudit volume total desdites parties (115) des tours (108a-c).

7. Appareil (100) selon l'une quelconque des revendications précédentes, la section d'égouttage (112a-c) comprenant une buse de nettoyage en place (134a-c) .

8. Appareil (100) selon l'une quelconque des revendications précédentes, l'unité de base (114) comprenant
des dispositifs de dosage (136a-c) verticalement mobiles disposés sous chacune des tours multiples (108a-c) pour recevoir le caillé égoutté (116), et
une unité de coupe (138a-b) pour couper le caillé égoutté (116) reçu par les dispositifs de dosage (136a-c) en blocs (130),
les dispositifs de dosage (136a-c) étant conçus pour commander individuellement la quantité de caillé qui est reçue et coupée de la tour (108a-c) respective.

9. Appareil (100) selon l'une quelconque des revendications précédentes, une distance (D) entre deux tours placées consécutivement des tours multiples (108a-c) étant inférieure à 0,3 m.

10. Procédé (200) d'égouttage et de formation de caillé, ledit procédé comprenant les étapes consistant à distribuer (204) un mélange de caillé et de lactosérum (104) dans des tours multiples (108a-c) disposées verticalement à l'aide d'un dispositif de distribution commun (132) et par l'intermédiaire d'une entrée commune (110),
égoutter (206) le lactosérum (102) du mélange de caillé et de lactosérum (104) dans une section d'égouttage (112a-c), la section d'égouttage (112a-c) formant un espace continu (113a-c) qui s'étend horizontalement sur chacune des tours multiples (108a-c), chacune des tours multiples (108a-c) ayant des ouvertures (128) dans l'espace continu (113a-c) formé par la section d'égouttage (112a-c) pour permettre le passage du lactosérum (102) depuis les tours multiples (108a-c) et dans la section d'égouttage (112a),
recevoir (208) le caillé égoutté (116) provenant des tours multiples (108a-c) par une unité de base (114), disposée sous les tours multiples (108a-c), et
placer (210) le caillé égoutté (116) dans des moules (118), **caractérisé par** l'étape consistant à utiliser une unité de circulation de lactosérum (142a-c) raccordée à la section d'égouttage (112a-c) pour faire circuler le lactosérum (102) sur la section d'égouttage (112a-c), pour augmenter l'écoulement du lactosérum et libérer ainsi le caillé égoutté (116) dans la section d'égouttage (112a-c).
